(19)

Europäisches
Patentamt
European
Patent Office
Office européen
des brevets

(11) **EP 1 936 568 B1**

(12) **EUROPEAN PATENT SPECIFICATION**

(45) Date of publication and mention
of the grant of the patent:
**16.11.2011 Bulletin 2011/46**

(51) Int Cl.:
***G06T 7/00*** *(2006.01)*

(21) Application number: **07253363.1**

(22) Date of filing: **24.08.2007**

(54) **Multiple image registration apparatus and method**

Vorrichtung und Verfahren zur Registrierung mehrerer Bilder

Appareil et procédé de recalage de plusieurs images

(84) Designated Contracting States:
**DE FR GB**

(30) Priority: **20.12.2006 GB 0625455**

(43) Date of publication of application:
**25.06.2008 Bulletin 2008/26**

(73) Proprietors:
• **Mitsubishi Electric Information Technology
Centre
Europe B.V.
Guildford, Surrey GU2 5YD (GB)**
Designated Contracting States:
**GB**
• **Mitsubishi Electric Corporation
Chiyoda-ku
Tokyo 100-8310 (JP)**
Designated Contracting States:
**DE FR**

(72) Inventor: **Sibiryakov, Alexander
Guildford, Surrey GU2 9TJ (GB)**

(74) Representative: **Brinck, David John Borchardt
R.G.C. Jenkins & Co
26 Caxton Street
London SW1H 0RJ (GB)**

(56) References cited:
WO-A-02/25592          WO-A-2005/020151
US-A1- 2005 063 608     US-B1- 6 591 011

• PILU M ET AL: "Fast and robust planar
registration by early consensus with applications
to document stitching" APPLICATIONS OF
COMPUTER VISION, 2002. (WACV 2002).
PROCEEDINGS. SIXTH IEEE WORKSHOP ON 3-4
DEC. 2002, PISCATAWAY, NJ, USA,IEEE, 3
December 2002 (2002-12-03), pages 245-250,
XP010628756 ISBN: 978-0-7695-1858-9

**Description**

This invention relates to a method of processing a set of images to identify groups of images which can be merged to form a panorama, and to generating panorama data corresponding to a group of images.

A method of panorama recognition is discussed by Lowe and Brown in the article "Recognising Panoramas" in the Proceedings of the 9th International Conference on Computer Vision, pp 1218-1225, Nice, France, October 2003. The method employed by Lowe and Brown is based on fast matching of scale invariant features (SIFT), robust estimation by Random Sample Consensus (RANSAC), bundle adjustment and multi-band image blending. In particular, image descriptors for all interest points are compared, and then identifying matches through nearest-neighbour searches in descriptor space. A probabilistic image match verification is then performed which compares the probabilities that the set of matched features resulted from a correct image match or from a false image match. This leads to a simple condition on the number of inliers and outliers in the area of overlap between the images, which allows the algorithm to reject false image matches in an effective manner.

The method of Lowe and Brown avoids quadratic-complexity problem of exhaustive feature matching by using high-dimensional feature space. While being efficient, this method has some drawbacks, in particular:

-    full sets of image descriptors are required to be extracted from images resulting in large memory and computation time consumption;
-    fast nearest-neighbour search becomes ineffective in high-dimensional space (usually 128-dimensional in the above method), and different approximated search methods are applied resulting in frequent mismatches.

Therefore, it is essential to design a method that reduces a quadratic complexity of feature matching and uses only low-dimensional criteria to establish correspondent features.

EP-A-1736928 discusses using a cluster-based approach for making decisions about image registration. The features from a first image are iteratively selected and the best matches with the features of a second image are computed. For these best matches, local rotation and scale transformation parameters between image regions centred at the feature points are estimated and a rotation-scale accumulator is updated by incrementing the element corresponding to the estimated transformation parameters. All feature matches contributing to the highest peak in the rotation-scale accumulator are then extracted and processed by RANSAC to check for global consistency. If the number of RANSAC inliers is sufficient, the image pair is considered as registered and iterations stop.

The method discussed in EP-A-1736928 has some drawbacks. In particular:

-    a large number of feature matches for non-matching image pairs must be computed before a decision on non-registration is made;
-    after the first few iterations, noisy clusters can be larger than the cluster of true matches, and processing noisy clusters with RANSAC can result in false decisions on registration;
-    even if the true cluster is selected correctly and the number of RANSAC inliers is high, the correctly matched interest points can be grouped in one part of the image, resulting in low registration accuracy; and
-    the highest peak of the accumulator does not always indicate the cluster with true matches, because the false matches also contribute to the peak's height value.

Graph structure is often used to represent pairwise image registrations within a set of images, see for example "Image Mosaicing and Super-Resolution" by D. Capel, PhD thesis, Dept of Eng. Science, univ. of Oxford, 2001 and "Robust video mosaicing through topology inference and local to global alignment" by Sawhney et al in Proc. European Conference on Computer Vision and Image Understanding, No. 2, Vol. 93, pp 175-194, 2004. A registration graph is employed in which images are represented by graph nodes and their two-view relations (feature correspondences, homography) are represented as graph edges. Transitive closure of the graph makes it possible to identify image relations that have not been explicitly established by the image registration algorithm. For example, if an image pair (A, B) is registered and there exists a path between B and C in the registration graph, the registration (or decision on non-registration) of A and C can be obtained using a sequence of homographies determined by the optimal path between A and C. If images A and C overlap to a high degree, registration can be performed using a fast homography-guided algorithm using features from the area of overlap.

In many previous approaches, the registration graph is initialised by pairwise registration of consecutive images or video frames, thus assuming that the image order is determined. If an adjacency matrix represents the graph, such initialisation corresponds to filling the matrix elements located just above the main diagonal. When this initialisation is performed, the next step of transitive closure corresponds to filling the elements in the next diagonal (above previously filled diagonal) and the process is repeated while an overlap between unregistered images can be found. Such a deterministic algorithm is not applicable in the case of unordered images, because the graph cannot be initialised with pairwise registrations.

An object of the present invention is to reduce the number of features in a set of images which have to be compared in order to identify groups of images which each correspond to a panorama.

US 2005/0063608 discusses a system for creating a panorama image from a plurality of source images. Initial registration between adjoining pairs of images is carried out using a feature-based registration approach. In particular, the first three hundred corners detected in each of adjoining images is used.

Aspects of the present invention are set out in the accompanying claims. When comparing a distinctive feature from one image with distinctive features in other images, only those distinctive features in the other images with similar feature strengths are compared. In this way the amount of processing is reduced.

The feature strengths may be calculated by processing the image data using an interest point detector which generates an interest value for each point in the image, identifying local maxima as interest points, and then normalising the values of the local maxima to generate feature strengths. Preferably, a logarithmic normalisation takes place.

Preferably, the number of feature comparisons is further compared by iteratively performing a probabilistic analysis of the results of previous feature comparisons, and if rejecting image pair matchings if the probabilistic analysis indicates that a match is statistically improbable.

The number of feature matchings can further be reduced by iteratively performing transitive graph closure on the registration graph. In this way, overlapping images identified by the transitive closure operation can be registered, and/or non-overlapping images can be rejected.

Various exemplary embodiments of the invention will now be described with reference to the attached figures in which:

Figure 1 schematically represents a first embodiment of the invention;

Figure 2 schematically shows the main components of an image processing module illustrated in Figure 1;

Figure 3 is a flow chart showing an overview of the processing operations performed by the image processing module illustrated in Figure 2;

Figure 4 is a flow chart showing in more detail an initialisation sub-routine which is one of the processing operations illustrated in Figure 3;

Figure 5 is a flow chart showing in more detail a feature matching sub-routine which is one of the processing operations performed in Figure 3;

Figure 6 schematically shows data recorded in a Hough Transform accumulator during image processing for a sample set of images;

Figure 7 schematically shows data recorded in a Threshold accumulator during image processing of a sample set of images;

Figure 8 is a flow chart showing the main operations in a sub-routine for updating a registration graph and/or probabilistic condition which is one of the processing operations performed in Figure 3;

Figure 9 is a flow chart showing the main operations in a sub-routine for performing transitive registration graph closure which is run as part of the sub-routine illustrated in Figure 8; and

Figures 10A to 10D schematically illustrate the development of the registration graph during panorama recognition.

**Main Embodiment**

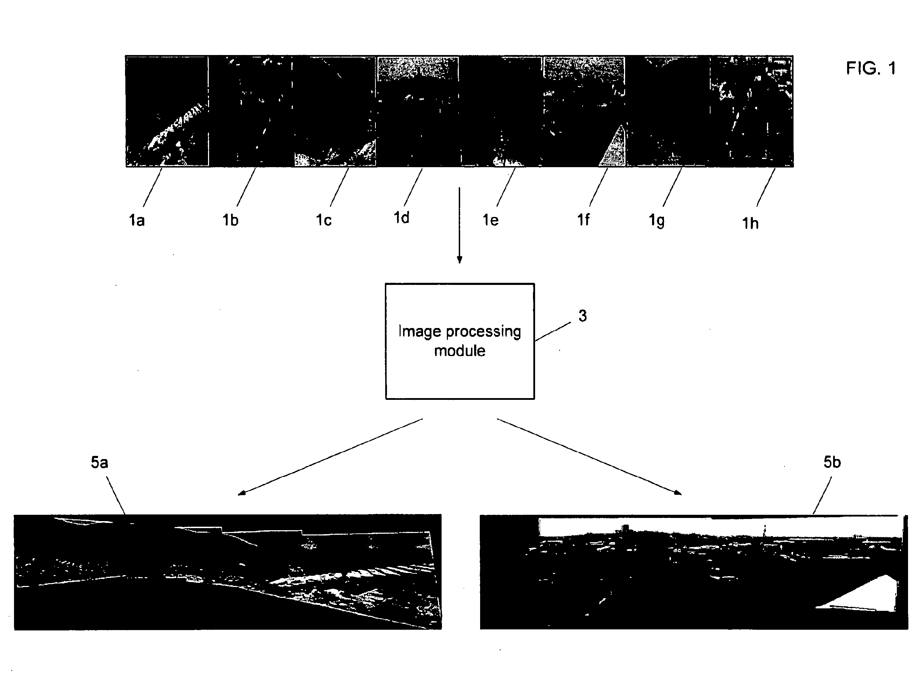

As shown in Figure 1, in this embodiment a plurality of images 1a-1h are input into an image processing module 3. In this exemplary embodiment, the plurality of images 1 are an unordered set of eight images 1, a first group of four of which are pictures of a Roman amphitheatre and a second group of four of which are pictures of a city roofscape.

In a manner which will be described in detail below, the image processing module recognises the groups of images which form panorama views and merges the images in each recognised group together. In this way, a first panorama image 5a is formed of a Roman amphitheatre and a second panorama image 5b is formed of a city roofscape.

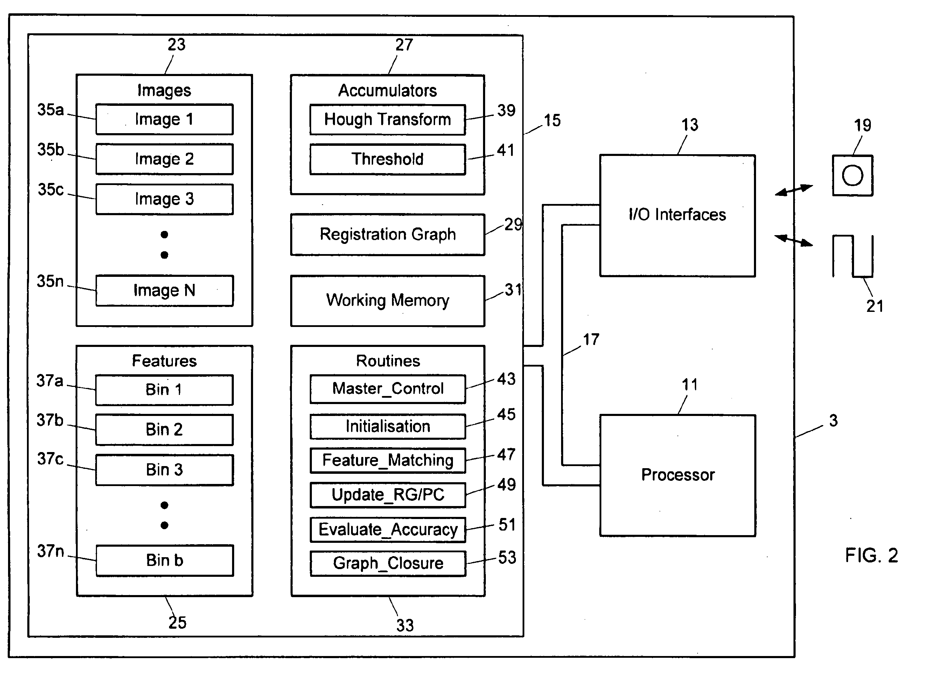

Figure 2 shows the main components of the image processing module 3. In this embodiment, the image processing module 3 forms part of a computing apparatus having a processor 11, input/output interfaces 13 and memory 15 interconnected by a bus system 17.

In this embodiment, the input/output interfaces 13 include a CD-ROM reader/writer (not shown) which allows data to be written to or read from a CD-ROM 19, and a network interface (not shown) which allows data to be input and output in the form of data signals 21.

The processor 11 uses routines stored in the memory 15 to process image data stored in the memory 15 or input by the interfaces 13 to generate panorama data. This panorama data can be stored in the memory 15 and/or output via the interfaces 13.

For ease of illustration, Figure 2 schematically shows the memory 15 split up into memory regions. As shown, the memory 15 has an images region 23, a features region 25, an accumulators region 27, a registration graph region 29, a working memory region 31 and a routines region 33. It will be appreciated that these memory regions need not correspond to contiguous blocks of memory. In addition, in a conventional manner the memory 15 may include various memory devices having different access times with conventional data caching techniques being employed to reduce processing time.

The images memory region stores N images 35a-35n. Each image 35 comprises a two-dimensional array of image data so that the images 35 may be represented as $I_k(x,y)$ for k = 1.....N.

The features memory region 25 stores feature data for interest points identified in the images 35 stored in the images region 23. These interest points correspond to distinctive features in the images 35 which may be compared to determined if the images contain common features. Each interest point has a corresponding strength value and, as will be discussed in more detail hereafter, in this embodiment interest points with similar strength values are grouped together into bins 37a-37n.

The accumulators memory region stores a Hough transform accumulator 39 and a Threshold accumulator 41. The Hough transform accumulator 39 logs, for each pair of images 35, the relative orientations and scales of features from that pair of images which are judged similar. A cluster of matched features between a pair of images having similar relative orientations and scales is indicative of an overlap between the corresponding images. However, identifying matching features is processing intensive and therefore in this embodiment once a comparatively small number of matches with similar relative orientations and scales is identified, further testing is performed to assess the reliability of the matches. As will be discussed in more detail hereafter, the Threshold accumulator 41 keeps track of how many more potentially reliable matched features with similar relative orientations and scales need to be identified before such further testing is carried out.

The registration graph 29 stores data representative of the determined matching between the images 35 in the images memory region 23. In particular, for each pair of images $(k_1,k_2)$ the registration graph 29 stores a Registration $[k_1,k_2]$ and a Similarity $[k_1,k_2]$ value. The Registration $[k_1,k_2]$ has three possible values: TRUE indicating that Image $k_1$ has been found to overlap Image $k_2$; FALSE indicating that Image $k_1$ has been found not to overlap image $k_2$; and UNDEFINED indicating that further testing is required. The Similarity $[k_1,k_2]$ value is a number indicative of the quality of similarity between Image $k_1$ and Image $k_2$.

The working memory region 31 is used by the processor 11 to store intermediate data during processing operations.

The routines memory region 33 stores the routines which are used by the processor 11 during panorama recognition. In this embodiment, the routines memory region stores:

- a Master_Control routine 43 which co-ordinates the panorama recognition process;
- an Initialisation sub-routine 45 which initialises the Hough Transform accumulator 39, the Threshold accumulator 41 and the registration graph 29;
- a Feature_Matching sub-routine 47 which performs iterative feature matching;
- an Update_RG/PC sub-routine 49 which is used to update the registration graph and/or probabilistic conditions used to assess image overlap;
- an Evaluate_Accuracy sub-routine 51 which is used to evaluate and improve a homography transformation linking overlapped regions of two images; and
- a Graph_Closure sub-routine 53 which is used to perform transitive graph closure each time a new edge is added to the Registration Graph 29.

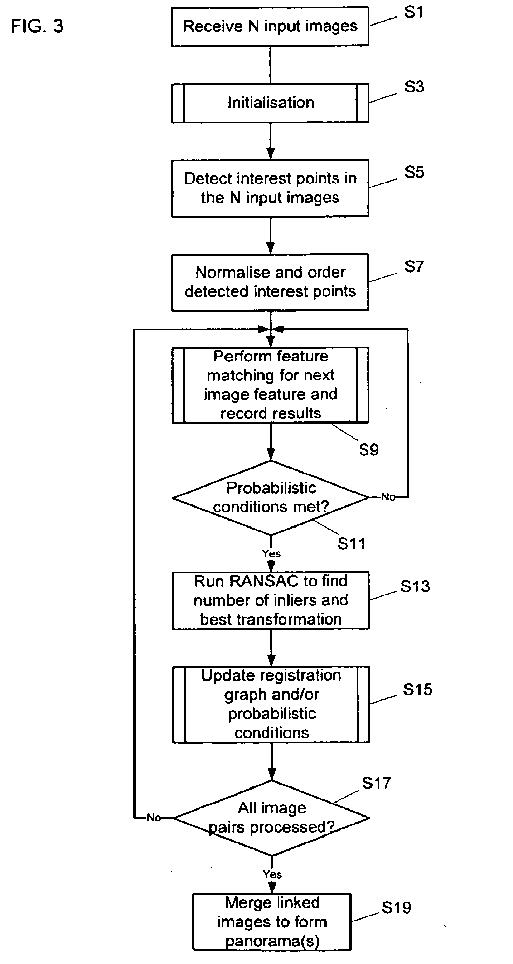

The main steps in the Master_Control routine 43 are shown in Figure 3. As shown, following receipt, at S1, of N input images the Master_Control routine 43 calls the Initialisation sub-routine 45.

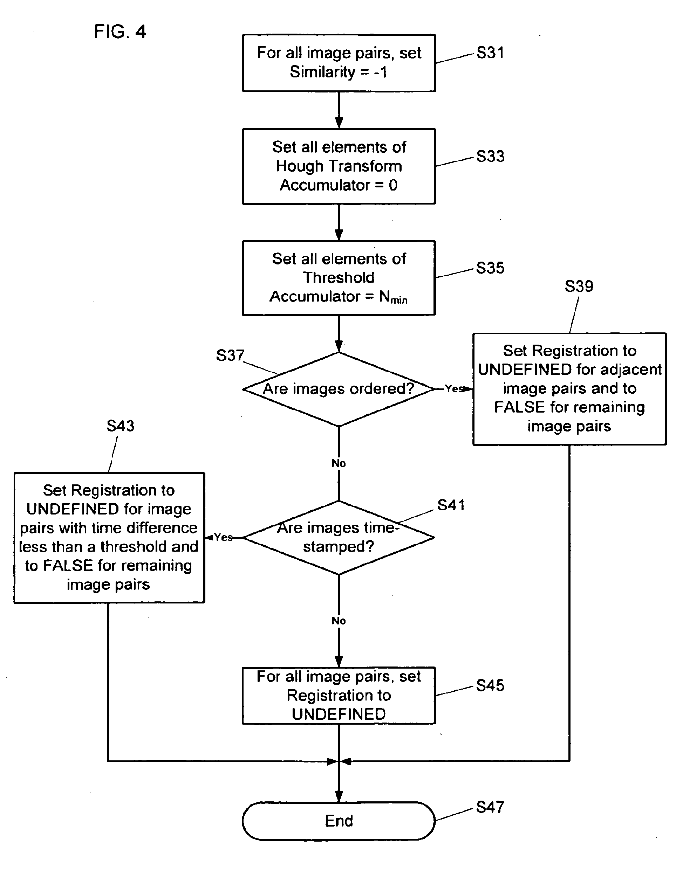

As shown in Figure 4, the Initialisation sub-routine 45 sets, at S31, the Similarity value in the Registration graph for each pair of images to -1. The Initialisation sub-routine 45 then sets, at S35, all the elements of the Hough Transform accumulator to 0, and sets, at S37, all the elements of the Threshold accumulator to $N_{min}$, where $N_{min}$ is the minimum number of reliable feature matches required to enable confirmation of overlap between two images. The manner in which the value of $N_{min}$ is calculated will be discussed in more detail hereafter.

The Initialisation sub-routine 45 then checks, at S37, if the Images include ordering information indicating the order in which the images were recorded. If the images are ordered, then the Initialisation sub-routine 45 sets the Registration data for consecutive images to UNDEFINED and sets the Registration data for all other image pairs to FALSE. This means that, at least initially, overlap between non-consecutive images is not investigated. The Initialisation sub-routine 45 then ends, at S47.

If the images are not ordered, then the Initialisation sub-routine 45 checks, at S41, if the images are time-stamped (i.e. include the time at which the images were recorded). If the images are time-stamped, then the Initialisation sub-routine 45 sets the Registration data for Images which were recorded within a predefined time of each other, for example ten minutes, to UNDEFINED and sets the Registration data for all other image pairs to FALSE. This means that, at least initially, overlap between images which were recorded more than the predefined time apart is not investigated. The initialisation sub-routine 45 then ends, at S47. If the Images 35 are not time-stamped, then the Initialisation sub-routine sets, at S45, the Registration data for all image pairs to UNDEFINED and the Initialisation sub-routine ends, at S47.

Returning to Figure 3, when the Initialisation sub-routine 45 has ended, the Master_Control routine then detects, at S5, interest points in the Images 35. In this embodiment, a modified version of the Foerstner Operator described in the article "A fast algorithm for detection and precise location of distinct points, corners, and circular features" by Foerstner and Gulch in Proc. Intercommission Conference on Fast Processing of Photogrammetric Data, Interlaken (1987) pp287-305 is used. In particular, the ratio R(x,y) of the determinant and the trace of an autocorrelation matrix A computed in the local neighbourhood n(x,y) of each pixel is calculated as set out in equations (1) and (2) below:

$$R(x,y) = \frac{\det A(x,y)}{trace A(x,y)} \qquad (1)$$

where:

$$A(x,y) = \sum_{(x',y') \in n(x,y)} G(x',y') \begin{bmatrix} I_x^2(x',y') & I_x(x',y')I_y(x',y') \\ I_x(x',y')I_y(x',y') & I_y^2(x',y') \end{bmatrix} \qquad (2)$$

In equation (2), a Gaussian G(x,y) is used to weight the derivatives summed over the window. Interest points are identified by fitting a quadratic to each local maximum in the map of R(x,y). The position of a local maximum corresponds to the position of an interest point, and the estimated value of the local maximum determines the feature strength $R_m$. The detected interest points in each image are sorted in order of decreasing feature strength so that the most prominent interest points are located toward the top of the list. Accordingly, $R_1 \geq R_2 \geq ... \geq R_m \geq ... \geq R_n$.

After detecting the interest points, the Master_Control routine 43 normalises, at S7, the detected interest points. In this embodiment, normalisation is performed on an image-by-image basis, with the normalised feature strength for each interest point m in an image being given by equation (3) below:

$$r_m = \frac{\log R_m - \log R_n}{\log R_1 - \log R_n} \qquad (3)$$

This gives a range of normalised corner strengths varying over the interval 0 to 1. The features from all of the images are then sorted into the bins 37 in accordance with their feature strengths. In particular, in this embodiment each bin 37 corresponds to a distinct percentile of the interval 0 to 1 with bin 1 covering 0.00 to 0.01, bin 2 covering 0.01 to 0.02, and so on until bin 100 covers the range 0.99 to 1.00. Each feature f is indexed by a global index i over all images in order of feature strength, and a feature $f_i$ stores the following information:

$$f_i = (x_i, y_i, m_i, k_i, d_i) \qquad (4)$$

where $k_i$ identifies the image in which the feature occurs, $m_i$ identifies the index number of the feature in that image, $(x_i, y_i)$ is the location of the feature in image $k_i$, and $d_i$ is a feature descriptor used for comparison purposes. In this embodiment, the feature descriptor $d_i$ is formed by a log-polar transformation (LPT) of the pixel values in a local image region centred at the interest point according to:

$$(x(\theta, s), y(\theta, s) = (x_i, y_i) + e^s (\cos\theta, \sin\theta) \qquad (5)$$

The reason for normalising and sorting the interest points is that generally a feature will have a similar distinctiveness in different images in which the feature appears. The feature strength is not, however, invariant to multiplicative intensity changes. Accordingly, normalisation is performed to remove the multiplicative factor.

After the interest points have been normalised and sorted, the Master_Control routine 43 calls the Feature_Matching sub-routine 47.

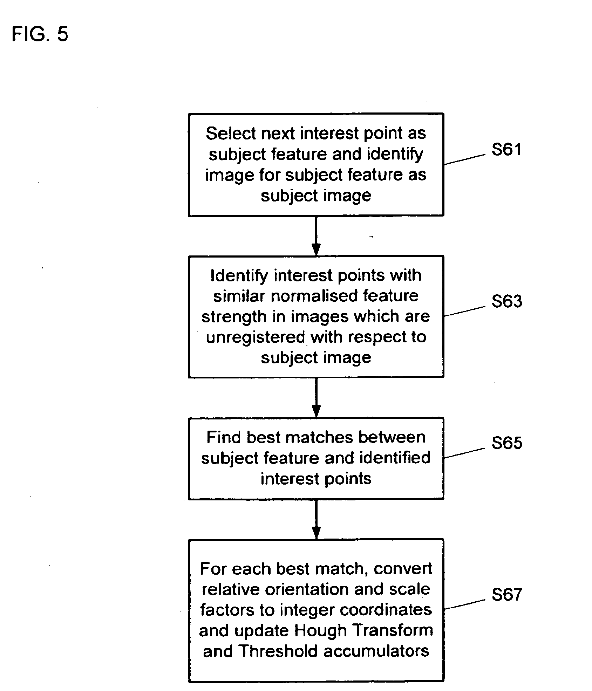

As shown in Figure 5, the Feature_Matching sub-routine 47 selects, at S61, the next interest point to be evaluated, which will be referred to as the subject feature. In this embodiment, the interest points are investigated in order of decreasing feature strength (i.e. the most distinctive features are identified first). Accordingly, the subject feature is the interest point having the highest feature strength which has not already been evaluated.

The Feature_Matching sub-routine 47 then identifies, at S63, features with similar normalised feature strength which appear in other images which are currently unregistered with respect to the image in which the subject feature appears (i.e. for which the Registration data between the two images is UNDEFINED). In particular, in this embodiment only features having a normalised feature strength within 0.15 of the normalised feature strength of the subject feature are investigated. In other words, only those features in bins corresponding to normalised feature strengths within 0.15 of the normalised feature strength of the subject feature are investigated.

Having identified features with similar normalised feature strength in other images which have not yet been registered with the image of the subject feature, the Feature_Matching sub-routine 47 then finds, at S63, the best matches between the subject feature and the identified features. This involves comparing the descriptor $d_i$ of the subject feature $f_i$ with the descriptors of the identified features. The similarity is characterised by a numerical value $\upsilon$, local relative orientation $\theta$ and scale factor S between image regions.

As discussed previously, the descriptor $d_i$ for each interest point is generated using an LPT transformation. In this way, scaling and orientation around the axis is represented by a shift in $(\theta, s)$ co-ordinates. Thus, by using a method of 2D matching a similarity value, the local rotation and the scale between image regions centred at interest points is obtained. In this embodiment, a rapid but less reliable 1D matching algorithm is first applied to projections of the log-polar image to filter out non-similar feature pairs, followed by a normalised correlation or phase correlation 2D matching algorithm.

Having found the best matches, the Feature_Matching sub-routine 47 converts, at S67, the orientation and scale parameters into integer co-ordinates and updates the Hough Transform accumulator 39 and the Threshold accumulator 41. As discussed previously, the Hough Transform accumulator 39 keeps track of the number of matches with similar orientation and scale values because true matches between two images usually have similar orientation and scale values, whereas false matches are usually uniformly distributed in the rotation-scale domain. Integer co-ordinates [p,q] are introduced in the $(\theta, logS)$ domain as follows:

$$\theta_q = \frac{2\pi p}{p_{max}}, p = 0, ..., p_{max-1} \qquad (6)$$

$$s_q = s_0 + q\Delta s, q = 0, ..., q_{max-1} \qquad (7)$$

where s = logS, $s_0$ is the logarithm of the minimal scale factor and $\Delta s$ is a discrete step of the log-scale axis.

In this embodiment, a separate Hough Transform accumulator is used for each image pair, so that for N images there are N(N-1)/2 Hough Transform accumulators with the Hough Transform accumulator for matches between interest points in image $k_i$ and image $k_j$ (where $k_i > k_j$) being represented by $A_{ij}[p,q]$. Each Hough Transform accumulator is a 2D array of integers. For the subject feature, each of the best identified matches is mapped into [p,q]-coordinates and the corresponding [p,q] value in the Hough Transform accumulator linking the image of the subject feature and the image of that best match is increased by 1.

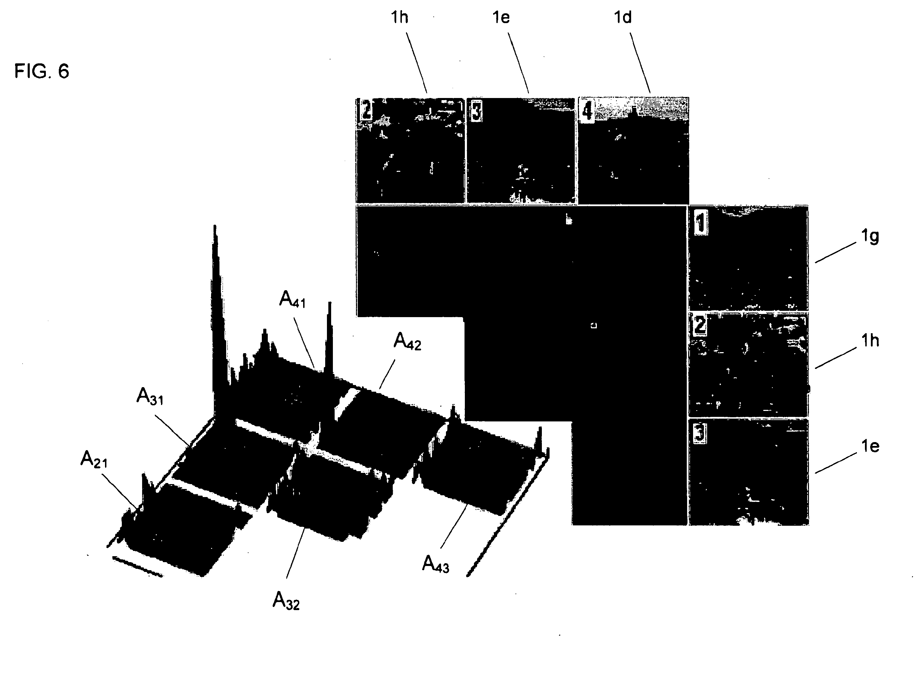

Figure 6 shows this voting approach applied, for ease of illustration, to just four of the images 1, in particular images 1e and 1g which show overlapping views of the Roman amphitheatre and images 1d and 1h which show overlapping views of the city roofscape. Accumulator $A_{21}$ is associated with the pair of images 1h and 1g, accumulator $A_{31}$ is associated with the pair of images 1e and 1g, accumulator $A_{41}$ is associated with the pair of images 1d and 1g, accumulator $A_{32}$ is associated with the pair of images 1e and 1h, accumulator $A_{42}$ is associated with the pair of images 1d and 1h and accumulator $A_{43}$ is associated with the pair of images 1d and 1e.

In Figure 6, approximately 10% of the interest points from each image have been processed. Large peaks are present in accumulators $A_{31}$ and $A_{42}$ indicating large numbers of matched features with the same [p,q] values. This is expected as these accumulators are associated with pairs of images which overlap. Small noisy peaks in other accumulators show that the correspondent image pairs belong to different sequences and cannot be geometrically aligned.

While the distribution of feature matches in the Hough Transform accumulator is indicative of which images overlap, the number of geometrically consistent matches is a more discriminative indicator of a true cluster than the height of a peak in the Hough Transform accumulator. This is because a peak in the Hough Transform accumulator normally contains a number of false matches, and these false matches should be removed before computing the image transformation in order to reduce error. The false matches can be removed by applying a RANSAC estimator to identify matched feature pairs which are geometrically consistent with homography between the images (referred to as inliers) and matched feature pairs which are geometrically inconsistent (referred to as outliers). In this embodiment, the relative number of inliers and outliers is used when determining whether or not images overlap as will be described in more detail hereafter.

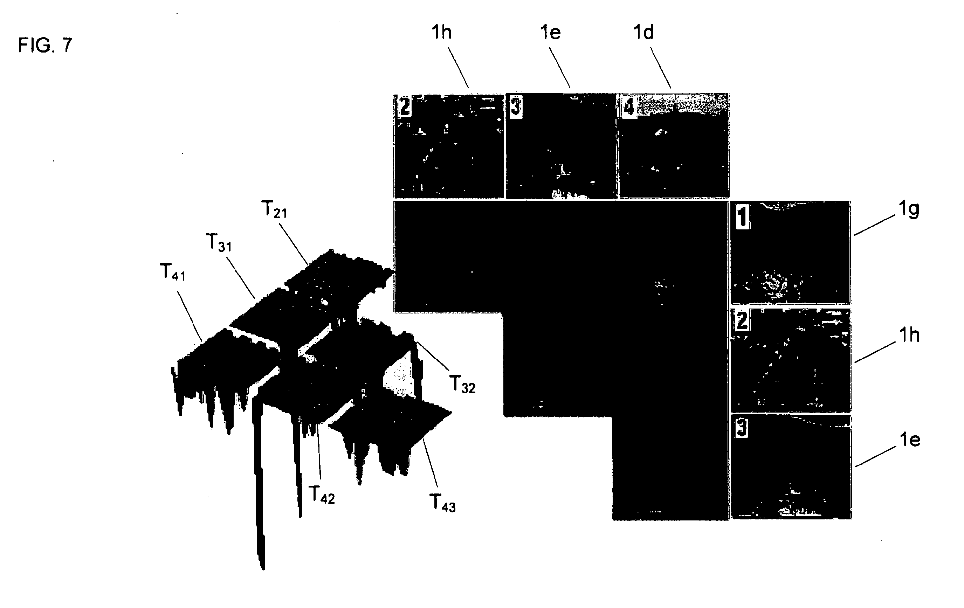

As shown in Figure 7, in the same manner as for the Hough Transform accumulator 39, the Threshold accumulator 41 includes a 2D accumulator in [p,q] space for each image pair. As discussed previously, all the elements in the Threshold accumulator 41 are initially set to $N_{min}$, and each of the best identified matches is mapped into [p,q]-coordinates and the corresponding [p,q] value in the Threshold accumulator linking the image of the subject feature and the image of that best match is decreased by 1.

Returning to Figure 3, after performing feature matching for a subject feature, the Master_Control routine 43 checks, at S11, if any elements of the Threshold accumulator 41 have reached zero. If not, then the Master_Control routine 43 performs feature matching for the next image feature. However, if the an element of the Threshold accumulator 41 has reached zero, then the Master_Control routine runs, at S9, RANSAC to identify inliers and the best transformation. In particular, RANSAC processes the feature matches corresponding to the peak in the Hough Transform accumulator 39 to determine a region of overlap and the number of inliers among the interest points in that region of overlap based on an estimated homography. The homography parameters are then re-estimated from all the inliers and then the new more accurate homography parameters are used to find an extended set of inliers using feature matches from neighbouring Hough Transform accumulator elements. This process is repeated until the number of inliers is stable or a fixed number of iterations has been performed.

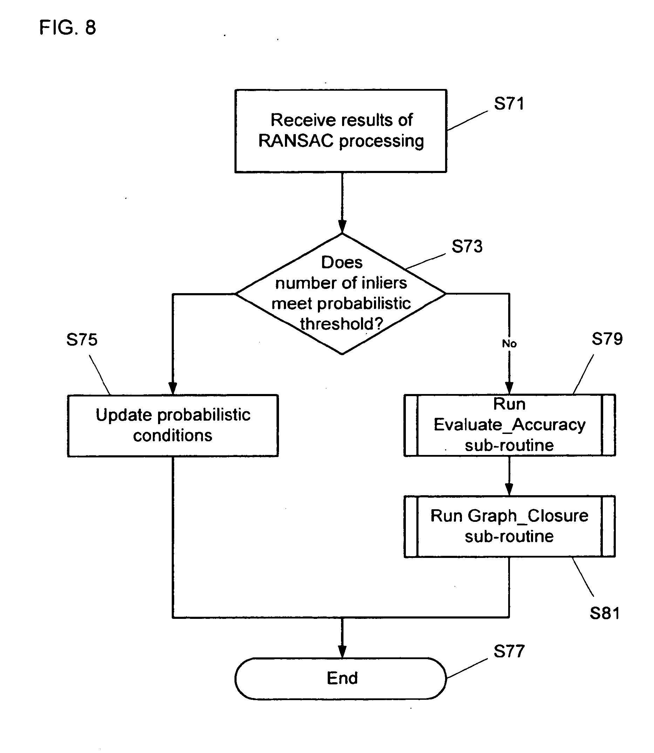

The Master_Control routine 43 then runs, at S 15, the Update_RG/PC sub-routine 49, which analyses the results of the RANSAC processing. The Update_RG/PC sub-routine will now be discussed in more detail with reference to Figure 8.

After receiving, at S71, the results of the RANSAC processing, the Update_RG/PC sub-routine 49 checks, at S73, if a probabilistic threshold for image matching is satisfied. The probabilistic threshold is based on Bayes rule, which allows the probability of an image match being correct to be determined from the number $N_{(i)}$ of inliers and the number $N_{(o)}$ of outliers. The total number of inliers is assumed to have a binomial distribution, so that the posterior probability of a correct image match is estimated using Bayes rule as:

$$P(Correctmatch|N_{(i)}) =$$

$$\frac{P(N_{(i)}|Correctmatch)P(Correctmatch)}{P(N_{(i)}|Correctmatch)P(Correctmatch) + P(N_{(i)}|Falsematch)(1 - P(Correctmatch))} \qquad (8)$$

where P(x | y) is the probability that x is TRUE given y.

Accepting an image match when P(Correct match $|N_{(i)}$) is greater than $P_{min}$ results in the condition:

$$N_{(i)} > \alpha + \beta\, N_{(o)} \qquad (9)$$

where numerical values for $\alpha$ and $\beta$ are obtained by setting values for the probability that a feature match is an inlier for the correct image match, the probability that a feature match is an outlier for a correct image match, $P_{min}$ and P(Correct match). Thus, the Update_RG/PC sub-routine 49 checks if the condition specified in Equation (9) is satisfied.

If the number of inliers does not meet the probabilistic threshold, then the Update_RG/PC sub-routine 49 updates, at S75, the probabilistic conditions and enters a new value in the element [p,q] of the Threshold accumulator 41 being investigated. From equation (9), it can be seen that the minimum number $N_{min}$ required to establish an image match occurs when the number of outliers is zero and is given by:

$$N_{\min} = [\alpha + 1] \qquad\qquad (10)$$

where [...] is the integer part of the real number. $N_{\min}$ is the initial value entered into the elements of the Threshold accumulator 41 as discussed previously. Accordingly, no further tests are performed until an element of the Threshold accumulator 41 contains the minimum number of features which allows designation of an image match.

If the relationship between the number $N_{(i)}$ of inliers and the number of outliers $N_{(o)}$ identified in the RANSAC processing does not satisfy equation (9), then the Update_RG/PC sub-routine 49 updates, at S75, the probabilistic condition to be satisfied before RANSAC processing is performed again. This is based on the fact that the minimum number $N_{\min}'$ of additional potential feature matches which is required to allow the possibility of designating an image match must satisfy equation (11):

$$N_{\min}' + N_{(i)} = \alpha + \beta\, N_{(o)} \qquad\qquad (11)$$

meaning that:

$$N_{\min}' = [\alpha + \beta\, N_{(o)} - N_{(i)} + 1] \qquad\qquad (12)$$

The value of the [p,q] element in the Threshold accumulator 41 corresponding to the cluster of feature matches being investigated is then set to $N_{\min}'$, so that RANSAC processing of those feature matches is not performed again until the minimum number of additional feature matches has been added to the [p,q] element to make it possible to satisfy equation (9).

It will be appreciated from equation (12) that the larger the number of outliers $N_{(o)}$ then the larger the value of $N_{\min}'$. Given this, it is possible for the value of $N_{\min}'$ to reach a value for which it is statistically unlikely that equation (9) will ever be satisfied. In particular, an estimate of the speed of growth of each Hough Transform accumulator element [p,q] is given by the ratio between the number of matches in the accumulator $A_{(i,j)}[p,q]$ and the number of features $m_i$ processed in the current image so far. Accordingly, the number of features which need to be compared before the next element of the Threshold accumulator $T_{(i,j)}$ reaches zero can be estimated by:

$$\Delta N_{(i,j)} = \min_{p,q} \frac{T_{(i,j)}[p,q]}{A_{(i,j)}[p,q]}\, m_i \qquad\qquad (13)$$

If the number of features left to be processed in an image $k_i$ is less than the minimal number determined $\Delta N_{(i,j)}$ by equation (13), then it is statistically unlikely that the image pair $k_i$, $k_j$ can be registered. Accordingly, when this occurs the Registration [$k_i$,$k_j$] is set to FALSE. This prevents any more features from image $k_i$ being compared with features from image $k_j$.

In Figure 7, about 10% of the features from each image have been processed. Two elements, one in accumulator $T_{31}$ and the other in accumulator $T_{42}$, have already reached zero, indicating that image pairs (3,1) and (4,2) are possible matches. Another element, located in accumulator $T_{32}$, is approaching zero, indicating that the corresponding cluster of feature matches could be processed using RANSAC after the next few iterations. When this element reaches zero, the RANSAC processing will find very few inliers and a large number of outliers, resulting in a large revised threshold value for that element. This is the expected result because images 3 and 2 do not form part of the same panorama.

If the number of inliers identified in the RANSAC processing does satisfy the probabilistic condition defined by equation (9), then the Update_RG/PC sub-routine 49 runs, at S77, the Evaluate_Accuracy sub-routine 51.

The Evaluate_Accuracy sub-routine 51 calculates a Current_Similarity value for the two images $k_i$, $k_j$ by performing a correlation analysis of the area of overlap of the two images, and the best homography between images $k_i$ and $k_j$. If the calculated Current_Similarity value is greater than the value of Similarity [$k_i$, $k_j$], then the value of Similarity [$k_i$, $k_j$] is set to the calculated Current_Similarity value. If the Current_Similarity value is above a predefined threshold, then the value of Registration [$k_i$, $k_j$] is set to TRUE. This prevents the comparison of any more features from images $k_i$

and $k_j$.

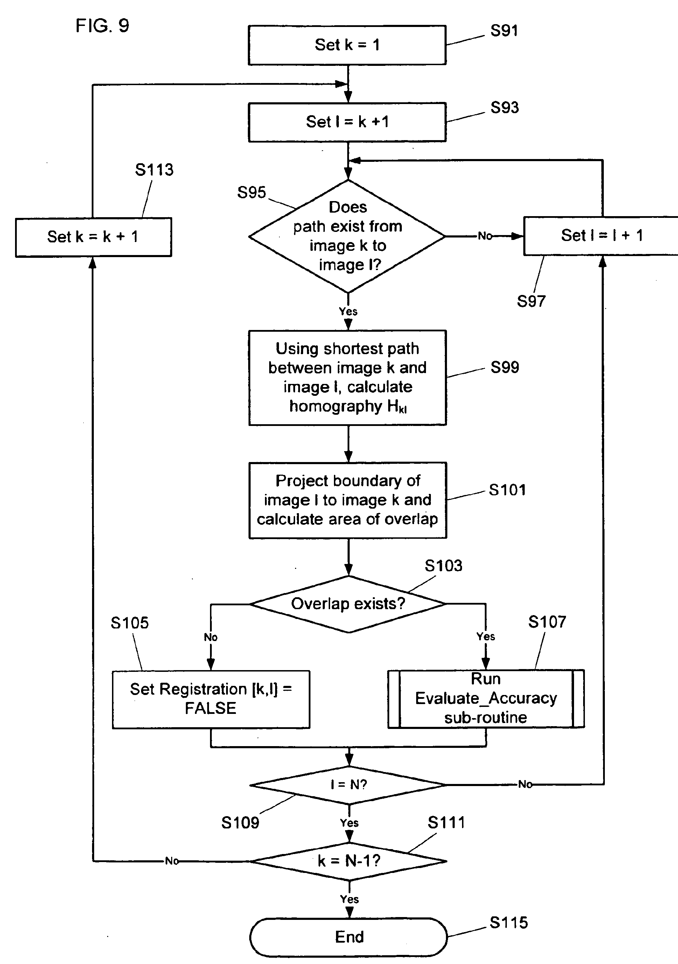

Returning to Figure 8, the Update_RG/PC sub-routine 49 then runs, at S81, the Graph_Closure sub-routine 53. Generally, the Graph_Closure sub-routine 53 checks if the new registration information for images $k_i$ and $k_j$ can be used to improve the registration information for any other image pairs. This will now be described in more detail with reference to Figure 9.

As shown in Figure 9, the Graph_Closure sub-routine iterates between image pairs with at any time image $k_k$ and $k_l$ (where 1 > k) being investigated. Initially, the value of k is set, at 591, to 1 and the value of 1 is set, at S93, to k+1. The Graph_Closure sub-routine 53 then determines, at S95, if a path exists from image $k_k$ to image $k_l$. If a path does not exist, then 1 is set, at S95, to 1+1 and then it is checked again if a path exists. If a path does exist, then the homography $H_{kl}$ is calculated based on the shortest path between image $k_k$ and image $k_l$.

The shortest path between two images is not necessary the path employing the smallest number of images. Longer paths with more accurate homographies may be preferred to shorter paths with less accurate homographies. In graph theory, the shortest path problem is finding the shortest path between two vertices such that the sum of the weights of constituent edges is minimised. In this embodiment, the weighting (1-Similarity[$k_i$,$k_j$] is applied to the edge bridging image $k_i$ and image $k_j$. This weight takes into account the accuracy of the image registration without taking into account the area of overlap or the number of inliers, as neither of these factors is critical for good registration.

After calculating the homography $H_{k1}$, the boundary of image 1 is projected onto image k to calculate, at S105, an area of overlap. If no area of overlap exists, then the Graph_Closure sub-routine sets, at S105, Registration [k,1] to FALSE, thereby preventing any more comparison of features in image $k_k$ with features in image $k_l$. If there is an area of overlap, then the Graph_Closure sub-routine runs, at S107, the Evaluate_Accuracy sub-routine 51 to optimise and store the best value for the Similarity [k,l] and the Homography [k,l] and, if the value of Similarity [k,l] exceeds the predefined threshold, sets Registration [k,l] to TRUE to prevent further comparison of features in image $k_k$ with features in image $k_1$.

The Graph_Closure sub-routine 53 then checks, at S109, if the value of I equals N (the total number of images). If not, the value of 1 is increased, at S97, by one and then the existence of a path is checked again. If 1 does equal N, then the Graph_Closure sub-routine 53 checks, at S111, if k equals N-1. If not, then the value of k is increased, at S113, by one and then the value of 1 is set, at S93, to k plus one and the existence of a path is checked again. If k does equal N-1, then the Graph_Closure sub-routine 53 ends, at S115.

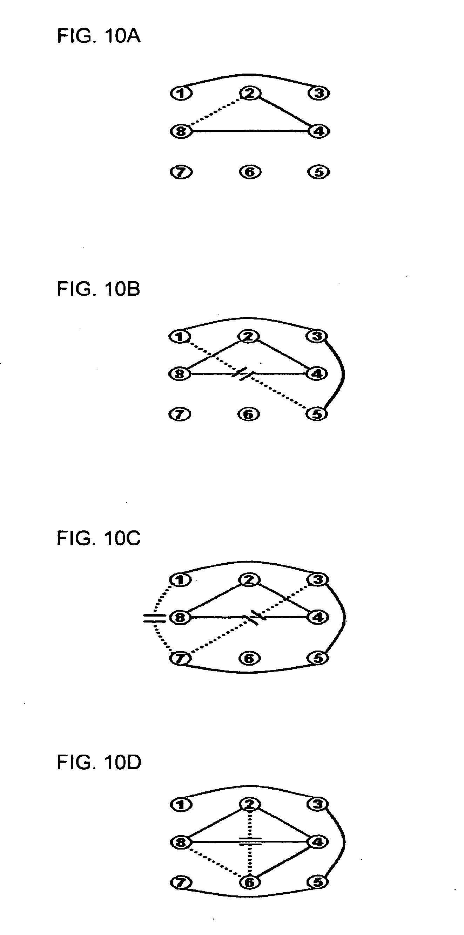

Figures 10A to 10D illustrate the way in which the registration graph develops. In Figure 10A around 4% of the features have been processed and image pairs (3,1), (4,2) and (8,4) have been registered (indicated by solid lines between the corresponding nodes of the registration graph). In addition, there is a path between image pair (2,8) via image 4, and based on the transformations between images 8 and 4 and images 4 and 2 an overlap has between images 8 and 2 has been identified.

In Figure 10B, around 11 % of the image features have been processed, and image pair (5,1) has been registered. In addition a path is now present between image pair (5,1) but no overlap has been calculated. In Figure 10C, about 40% of the features have been processed, and image pair (7,5) has been registered. In addition, paths are now present between images 7 and 1 and images 7 and 3, but no overlap has been calculated. Finally, in Figure 10D about 42% of the features have been processed, and image pair (6,4) has been registered. In addition, a path is present between image pair (8,6) and overlap has been calculated, and a path is present between image pair (6,2) but no overlap has been calculated.

Returning to Figure 3, after updating the registration graph and probabilistic conditions, the Master_Control routine 43 checks, at S 17, if all image pairs have been processed. If not, feature matching as described above is performed for the next feature and the process iterates until all image pairs have been registered. Once all image pairs have been registered, groups of connected images are identified from the registration graph, and the images in each group are blended together to form an output which is a set of panoramas.

### Modifications and Further Embodiments

In the main embodiment, the present invention is used to form panoramas from an unordered set of images. This can be useful for digital photography, because both professional and amateur users of digital cameras often take multiple shots of the same scene. This may involve, for example, 1) a panoramic sequence of the same scene, 2) multiple trials to find the best composition inside the frame, 3) multiple trials to find the best camera parameters (shutter speed, aperture), 4) images from a burst mode of the digital camera (when images are taken at small time intervals with possible changing of camera parameters), 5) multiple shots focussed on different objects, 6) multiple shots with flash/no flash, 7) multiple shots of different people in the same view. Thus, multiple shots of the same scene have a special meaning to the user, and some further processing may be desirable (e.g. creating a panorama for the panoramic sequence, selection of shot with best composition/exposure, selection of best portrait etc).

The present invention can be used for fast retrieval of all groups of same-view shots. While for panorama generation, image merging may be automatic, it will be appreciated that in other applications a merged image is not the desired result, but rather just the identification of group of images related to the same view. Implementation of the invention in photo-processing software will help the user to automate the otherwise manual work of images requiring further attention. In an embodiment, the photo-processing software may be implemented in a digital camera.

Another application of the present invention is airborne/satellite surveillance. Usually, airborne and satellite surveillance sensors collect images continuously along a route. These images are ordered. The problem occurs in registering images taken from different routes or orbits. Usually, the information on aircraft/satellite position helps to identify overlapping images from different tracks. The present invention can significantly simplify both problems of registration of along-track images and between-track images. The present invention uniformly incorporates into the registration graph the information on natural image ordering along the tracks and on time-based or position-based ordering of the tracks themselves.

A further application of the present invention is in multi-projector displays. Some large multimedia displays can use multiple projectors to visualise different parts of the same scene. The present invention can help to synchronise outputs from projectors by automatic registration of the projected images. Unordered input to the method makes it possible to use different layouts of projectors. This allows flexible positioning of the projectors without precise manual or semi-automatic processing.

In the main embodiment, a modified Foerstner operator is used to identify interest points. It will be appreciated that other algorithms for identifying interest points could be used, for example Moravec or Hannah operators. In the main embodiment, the feature strengths are normalised to a range between 0 and 1 using a logarithmic function. It will be appreciated that other functions could be used, such as $(R_m-R_n)/(R_1-R_n)$. In addition, the feature strength could be scaled to any range, rather than being normalised over the range 0 to 1.

Although a log-polar descriptor $d_i$ is used in the main embodiment, other types of descriptor, such as a normalised image patch or a SIFT descriptor, could be used.

The main embodiment primarily uses four techniques to reduce the number of feature matching operations required, namely:

1) Feature matching being limited to features with similar feature strengths;
2) Irrelevant feature pairs being rejected using a probabilistic approach on an iterative basis;
3) Overlapping images are registered using transitive closure of the registration graph on an iterative basis; and
4) Non-overlapping images are rejected using transitive closure of the registration graph.

It will be appreciated that not all four of these schemes need be used to obtain some benefit, although the best results are obtained when they are all used. In alternative embodiments, schemes 1) and 2), or schemes 1) and 3), or schemes 1) and 3) and 4) could be used.

The embodiment described with reference to the drawings comprises computer apparatus and involves processes performed in the computer apparatus. The invention also extends to computer programs, particularly computer programs on or in a carrier, adapted for putting the invention into practice. The program may be in the form of source code, object code, a code intermediate to source code and object code such as in partially compiled form, or in any other form suitable for using in the implementation of the processes according to the invention.

The carrier may be any entity or device capable of carrying the program. For example, the carrier may comprise a storage medium, such as a ROM, for example a CD-ROM or a semiconductor ROM, or a magnetic recording medium, for example a floppy disc or a hard disc, or an optical recording medium. Further, the carrier may be a transmissible carrier such as an electronic or optical signal which may be conveyed via electrical or optical cable or by radio or other means.

The carrier may be an integrated circuit in which the program is embedded, the integrated circuit being adapted for performing, or for use in the performance of, the relevant processes.

Although in the described embodiment the invention is implemented by software, it will be appreciated that alternatively the invention could be implemented by hardware devices or a combination of hardware devices and software.

## Claims

1. A method of processing a plurality of images (1a...1h) to determine one or more groups of images with each group of images forming a panorama (5a,5b), the method comprising:

   identifying distinctive features in each image;
   calculating a feature strength for each identified distinctive feature, wherein the calculating of the feature strengths comprises measuring the values of an interest point detection algorithm at local maxima, the position of a local maximum corresponding to the position of an interest point, and for each image scaling the measured values in accordance with the measured values in that image, wherein said scaling comprises normalising the values of the local maxima into a predefined range which is common to all images;

comparing a distinctive feature in one image with distinctive features in other images to identify possible matching features, wherein the comparison of two features comprises:

comparing image descriptors for a local region centred at one feature with a local region centred at the other feature to determine relative orientation and scale parameters for said two local regions,

recording the determined orientation and scale parameters in association with the image pair corresponding to the two features, and

for an image pair, analysing compared features having identical recorded orientation and scale parameters for global geometric consistency when the number of identical recorded orientation and scale parameters exceeds a threshold value; and

processing said possible matches to determine said one or more groups of images,

wherein said comparing comprises comparing said distinctive feature in one image with only the subset of the distinctive features in the other images which satisfy a level of similarity of feature strengths of the compared distinctive features.

2. A method according to claim 1, wherein said comparing stops when the minimal number of features taken from said one image satisfies one or more predefined criteria.

3. A method according to claim 1 or 2, wherein said scaling comprises calculating the logarithm of each measured value of a local maxima.

4. A method according to claim 3, wherein the feature strength $r_m$ for a distinctive feature in an image for which the measured value of the local maximum is $R_m$ is given by:

$$r_m = \frac{\log R_m - \log R_n}{\log R_1 - \log R_n}$$

where $R_1$ is the measured value for the local maximum for the most distinctive of the identified distinctive features and $R_n$ is the measured value of the local maximum for the least distinctive of the identified distinctive features.

5. A method according to any preceding claim, wherein said interest point detection algorithm employs a modified Foerstner operator.

6. A method according to any preceding claim, further comprising calculating an initial threshold value based on a probabilistic analysis of the smallest number of correct feature matches which allow registration of the image pair.

7. A method according to any preceding claim, wherein said global geometric consistency analysis comprises RANSAC processing.

8. A method according to any preceding claim, further comprising calculating a new threshold value for the number of additional feature matches having said identical recorded orientation and scale parameters if the result of the global geometry consistency analysis is negative.

9. A method according to claim 8, further comprising checking if the number of feature matches with identical orientation and scale parameters required to reach the threshold value associated with those orientation and scale parameters is probable on the basis on the total number on possible feature matches remaining and an estimated feature matching rate for each set of orientation and scale parameters, and if the check indicates that reaching a threshold is improbable then rejecting that image pair as a possible image pairing.

10. A method according to any preceding claim, further comprising updating a registration graph if the results of the global geometric consistency check is positive.

11. A method according to claim 10, wherein said updating comprises performing transitive graph closure.

**12.** A method according to claim 11, wherein said transitive graph closure comprises:

identifying an additional possible image pairing for a linked group of images; and
determining if the images in the additional image paring overlap based on homography information from other image pairings in the linked group of images.

**13.** A method according to claim 12, further comprising registering a possible image pairing following a determination that the images overlap.

**14.** A method according to claim 12 or 13, further comprising rejecting a possible image pairing following a determination that the images do not overlap.

**15.** A method according to any preceding claim, wherein said processing further comprises determining whether or not a pair of images satisfy probabilistic conditions for registration, and wherein said one or more predefined criteria specify that feature comparison does not take place for features which have already been registered.

**16.** A method according to claim 15, wherein said processing further comprises determining whether or not a pair of images satisfy probabilistic conditions for not being registered, and wherein said one or more predefined criteria specify that feature comparison does not take place for features which have already been determined not to be registered.

**17.** An apparatus operable to perform the method of any preceding claim.

**18.** An image processing apparatus operable to process a plurality of images (1a..1h) to determine one or more groups of images, with each group of images forming a panorama (5a,5b), the image processing apparatus comprising:

means for identifying distinctive features in each image;
means for calculating a feature strength for each identified distinctive feature, wherein the calculating means comprises means for measuring the values of an interest point detection algorithm at local maxima, the position of a local maximum corresponding to the position of an interest point, and for each image scaling the measured values in accordance with the measured values in that image, wherein said scaling comprises normalising the values of the local maxima into a predefined range which is common to all images;
means for comparing a distinctive feature in one image with distinctive features in other images to identify possible matching features, wherein the comparing means comprises:

means for comparing image descriptors for a local region centred at one feature with a local region centred at the other feature to determine relative orientation and scale parameters for said two local regions,
means for recording the determined orientation and scale factors in association with the image pair corresponding to the two features, and
means for analysing, for an image pair, compared features having identical recorded orientation and scale parameters for global geometric consistency consistency when the number of identical recorded orientation and scale parameters exceeds a threshold value; and

means for processing said possible matches to determine said one or more groups of images,
wherein said comparing means is operable to compare said distinctive feature in one image with only the subset of the distinctive features in the other images which satisfy a level of similarity of feature strengths of the compared distinctive features.

## Patentansprüche

**1.** Verfahren zum Verarbeiten mehrerer Bilder (1a... 1h) zum Bestimmen einer oder mehrerer Gruppen von Bildern, wobei jede Gruppe von Bildern ein Panorama (5a, 5b) bildet, wobei das Verfahren Folgendes umfasst:

Erkennen von Unterscheidungsmerkmalen in jedem Bild;
Berechnen einer Merkmalsstärke für jedes erkannte Unterscheidungsmerkmal, wobei das Berechnen der Merkmalsstärken das Messen der Werte eines Interest-Point-Detection-Algorithmus an lokalen Maxima, wobei die Position eines lokalen Maximums der Position eines Punktes von Interesse entspricht, und für jedes Bild das Skalieren der gemessenen Werte gemäß den gemessenen Werten in diesem Bild umfasst, wobei das Skalieren das Normalisieren der Werte der lokalen Maxima in einen vorbestimmten Bereich umfasst, der allen Bildern gemeinsam ist;

Vergleichen eines Unterscheidungsmerkmals in einem Bild mit Unterscheidungsmerkmalen in anderen Bildern zum Erkennen möglicher übereinstimmender Merkmale, wobei der Vergleich zweier Merkmale Folgendes umfasst:

Vergleichen von Bilddeskriptoren für einen lokalen Bereich, der auf ein Merkmal zentriert ist, mit einem lokalen Bereich, der auf das andere Merkmal zentriert ist, um Parameter der relativen Ausrichtung und des Maßstabs für die zwei lokalen Bereiche zu bestimmten,

Aufzeichnen der bestimmten Ausrichtungs- und Maßstabsparameter in Verbindung mit dem Bildpaar, die den zwei Merkmalen entsprechen, und

für ein Bildpaar, Analysieren verglichener Merkmale, die identische aufgezeichnete Ausrichtungs- und Maßstabsparameter aufweisen, auf globale geometrische Konsistenz, wenn die Anzahl von identischen aufgezeichneten Ausrichtungs- und Maßstabsparametern einen Schwellenwert überschreitet; und

Verarbeiten der möglichen Übereinstimmungen zum Bestimmen der einen oder mehreren Gruppen von Bildern, wobei das Vergleichen das Vergleichen des Unterscheidungsmerkmals in einem Bild mit lediglich der Teilmenge der Unterscheidungsmerkmale in den anderen Bildern umfasst, die einen Grad der Ähnlichkeit von Merkmalsstärken der verglichenen Unterscheidungsmerkmale erfüllen.

2. Verfahren nach Anspruch 1, wobei das Vergleichen beendet wird, wenn die Mindestanzahl von Merkmalen, die von dem einen Bild entnommen werden, eines oder mehrere vorbestimmte Kriterien erfüllt.

3. Verfahren nach Anspruch 1 oder 2, wobei das Skalieren das Berechnen des Logarithmus jedes gemessenen Werts eines lokalen Maximums umfasst.

4. Verfahren nach Anspruch 3, wobei die Merkmalsstärke $r_m$ für ein Unterscheidungsmerkmal in einem Bild, für das der gemessene Wert des lokalen Maximums $R_m$ ist, durch Folgendes gegeben ist:

$$r_m = \frac{\log R_m - \log R_n}{\log R_1 - \log R_n}$$

wo $R_1$ der gemessene Wert für das lokale Maximum für das unterscheidendste der erkannten Unterscheidungsmerkmale ist und $R_n$ der gemessene Wert des lokalen Maximums für das am wenigsten unterscheidende der erkannten Unterscheidungsmerkmale ist.

5. Verfahren nach einem der vorhergehenden Ansprüche, wobei der Interest-Point-Detection-Algorithmus einen geänderten Förstner-Operator verwendet.

6. Verfahren nach einem der vorhergehenden Ansprüche, das ferner das Berechnen eines Anfangsschwellenwerts auf der Grundlage einer Wahrscheinlichkeitsanalyse der kleinsten Anzahl richtiger Merkmalsübereinstimmungen umfasst, die die Registrierung des Bildpaars erlauben.

7. Verfahren nach einem der vorhergehenden Ansprüche, wobei die Analyse der globalen geometrischen Konsistenz eine RANSAC-Verarbeitung umfasst.

8. Verfahren nach einem der vorhergehenden Ansprüche, das ferner das Berechnen eines neuen Schwellenwerts für die Anzahl zusätzlicher Merkmalsübereinstimmungen umfasst, die die identischen aufgezeichneten Ausrichtungs- und Maßstabsparameter aufweisen, wenn das Ergebnis der Analyse der globalen geometrischen Konsistenz negativ ist.

9. Verfahren nach Anspruch 8, das ferner das Prüfen, ob die Anzahl von Merkmalsübereinstimmungen mit identischen Ausrichtungs- und Maßstabsparametern, die zum Erreichen des diesen Ausrichtungs- und Maßstabsparametern zugehörigen Schwellenwerts erforderlich ist, auf der Grundlage der Gesamtanzahl von möglichen übrigen Merkmalsübereinstimmungen und einer geschätzten Merkmalsübereinstimmungsrate für jede Menge von Ausrichtungs- und Maßstabsparametern wahrscheinlich ist, und, wenn die Prüfung angibt, dass das Erreichen eines Schwellenwerts unwahrscheinlich ist, dann das verwerfen dieses Bildpaars als eine mögliche Bildpaarbildung umfasst.

10. Verfahren nach einem der vorhergehenden Ansprüche, das ferner das Aktualisieren eines Registrierungsgraphen umfasst, wenn das Ergebnis der Prüfung der globalen geometrischen Konsistenz positiv ist.

11. Verfahren nach Anspruch 10, wobei das Aktualisieren das Durchführen eines Abschlusses eines transitiven Graphen umfasst.

12. Verfahren nach Anspruch 11, wobei der Abschluss des transitiven Graphen Folgendes umfasst:

Erkennen einer zusätzlichen möglichen Bildpaarbildung für eine verknüpfte Gruppe von Bildern; und
auf der Grundlage von Homographieinformationen von anderen Bildpaarbildungen in der verknüpften Gruppe von Bildern, Bestimmen, ob die Bilder in der zusätzlichen Bildpaarbildung sich überlappen.

13. Verfahren nach Anspruch 12, das ferner im Anschluss an eine Bestimmung, dass die Bilder sich überlappen, das Registrieren einer möglichen Bildpaarbildung umfasst.

14. Verfahren nach Anspruch 12 oder 13, das ferner im Anschluss an eine Bestimmung, dass die Bilder sich nicht überlappen, das Verwerfen einer möglichen Bildpaarbildung umfasst.

15. Verfahren nach einem der vorhergehenden Ansprüche, wobei das Verarbeiten ferner das Bestimmen umfasst, ob ein Paar von Bildern Wahrscheinlichkeitsbedingungen für die Registrierung erfüllt oder nicht, und wobei eines oder mehrere vorbestimmte Kriterien angeben, dass kein Merkmalsvergleich für Merkmale stattfindet, die bereits registriert wurden.

16. Verfahren nach Anspruch 15, wobei das Verfahren ferner das Bestimmen umfasst, ob ein Paar von Bildern Wahrscheinlichkeitsbedingungen erfüllt, um nicht registriert zu werden, und wobei die einen oder mehreren vorbestimmten Kriterien angeben, dass kein Merkmalsvergleich für Merkmale stattfindet, die bereits für das Nichtregistrieren bestimmt wurden.

17. Vorrichtung, die betriebsfähig ist, um das Verfahren nach einem der vorhergehenden Ansprüche durchzuführen.

18. Bildverarbeitungsvorrichtung, die betriebsfähig ist, um mehrere Bilder (1a... 1h) zu verarbeiten, um eine oder mehrere Gruppen von Bildern zu bestimmen, wobei jede Gruppe von Bildern ein Panorama (5a, 5b) bildet, wobei die Bildverarbeitungsvorrichtung Folgendes umfasst:

Mittel zum Erkennen von Unterscheidungsmerkmalen in jedem Bild;
Mittel zum Berechnen einer Merkmalsstärke für jedes erkannte Unterscheidungsmerkmal, wobei das Berechnungsmittel Mittel zum Messen der Werte eines Interest-Point-Detection-Algorithmus an lokalen Maxima, wobei die Position eines lokalen Maximums der Position eines Punktes von Interesse entspricht, und zum Skalieren der gemessenen Werte für jedes Bild gemäß den gemessenen Werten in diesem Bild umfasst, wobei das Skalieren das Normalisieren der Werte der lokalen Maxima in einen vorbestimmten Bereich umfasst, der allen Bildern gemeinsam ist;
Mittel zum Vergleichen eines Unterscheidungsmerkmals in einem Bild mit Unterscheidungsmerkmalen in anderen Bildern zum Erkennen möglicher übereinstimmender Merkmale, wobei die Vergleichsmittel Folgendes umfassen:

Mittel zum Vergleichen von Bilddeskriptoren für einen lokalen Bereich, der auf ein Merkmal zentriert ist, mit einem lokalen Bereich, der auf das andere Merkmal zentriert ist, um Parameter der relativen Ausrichtung und des Maßstabs für die zwei lokalen Bereiche zu bestimmen,
Mittel zum Aufzeichnen der bestimmten Ausrichtungs- und Maßstabsfaktoren in Verbindung mit dem Bildpaar, die den zwei Merkmalen entsprechen, und
Mittel zum Analysieren verglichener Merkmale für ein Bildpaars, die identische aufgezeichnete Ausrichtungs- und Maßstabsparameter aufweisen, auf globale geometrische Konsistenz, wenn die Anzahl von identischen aufgezeichneten Ausrichtungs- und Maßstabsparametern einen Schwellenwert überschreitet; und

Mittel zum Verarbeiten der möglichen Übereinstimmungen zum Bestimmen der einen oder mehreren Gruppen von Bildern,
wobei das Vergleichsmittel betriebsfähig ist, um das Unterscheidungsmerkmal in einem Bild mit lediglich der Teilmenge der Unterscheidungsmerkmale in den anderen Bildern zu vergleichen, die einen Grad der Ähnlichkeit von Merkmalsstärken der verglichenen Unterscheidungsmerkmale verfüllen.

## Revendications

1. Procédé destiné à traiter une pluralité d'images (1a ... 1h) de façon à déterminer un ou plusieurs groupes d'images, chaque groupe d'images formant un panorama (5a, 5b), le procédé comprenant les étapes consistant à :

identifier des caractéristiques distinctives dans chaque image ;
calculer une force de caractéristique pour chaque caractéristique distinctive identifiée, dans lequel le calcul des forces de caractéristiques comprend les étapes consistant à mesurer des valeurs d'un algorithme de détection de point d'intérêt au niveau des maximum locaux, la position d'un maximum local correspondant à la position d'un point d'intérêt, et pour chaque image, mettre à l'échelle les valeurs mesurées selon les valeurs mesurées dans cette image, dans lequel ladite mise à l'échelle comprend une étape consistant à normaliser les valeurs des maximum locaux dans une plage prédéfinie qui est commune à toutes les images ;
comparer une caractéristique distinctive dans une image avec des caractéristiques distinctives dans d'autres images de façon à identifier des caractéristiques de correspondances possibles, dans lequel la comparaison de deux caractéristiques comprend les étapes consistant à :

comparer des descripteurs d'image pour une région locale centrée au niveau d'une caractéristique avec ceux pour une région locale centrée au niveau de l'autre caractéristique de façon à déterminer des paramètres d'orientation et de mise à l'échelle relatifs pour lesdites deux régions locales ;
enregistrer les paramètres d'orientation et de mise à l'échelle déterminés en association avec la paire d'images correspondant aux deux caractéristiques ; et
pour une paire d'images, analyser des caractéristiques comparées qui présentent des paramètres d'orientation et de mise à l'échelle enregistrés identiques pour une uniformité géométrique globale lorsque le nombre de paramètres d'orientation et de mise à l'échelle enregistrés identiques dépasse une valeur de seuil ; et
traiter lesdites correspondances possibles de façon à déterminer ledit ou lesdits groupes d'images ;
dans lequel ladite étape de comparaison comprend une étape consistant à comparer ladite caractéristique distinctive dans une image avec seulement le sous-ensemble de caractéristiques distinctives dans les autres images qui satisfont à un niveau de similitude des forces de caractéristiques des caractéristiques distinctives comparées.

2. Procédé selon la revendication 1, dans lequel ladite étape de comparaison s'arrête lorsque le nombre minimal de caractéristiques prises à partir de ladite image satisfait à un ou à plusieurs critères prédéfinie.

3. Procédé selon la revendication 1 ou la revendication 2, dans lequel l'étape de mise à l'échelle comprend une étape consistant à calculer le logarithme de chaque valeur mesurée des maximums locaux.

4. Procédé selon la revendication 3, dans lequel la force de caractéristiques $r_m$ d'une caractéristique distinctive dans une image pour laquelle la valeur mesurée du maximum local est $R_m$, est donnée par :

$$r_m = \frac{\log R_m - \log R_n}{\log R_1 - \log R_n}$$

où $R_1$ est la valeur mesurée du maximum local de la plus distinctive des caractéristiques distinctives identifiées et $R_n$ est la valeur mesurée du maximum local de la moins distinctive des caractéristiques distinctives identifiées.

5. Procédé selon l'une quelconque des revendications précédentes, dans lequel ledit algorithme de détection de point d'intérêt utilise un opérateur de Förstner modifié,

6. Procédé selon l'une quelconque des revendications précédentes, comprenant en outre une étape consistant à calculer une valeur de seuil initial sur la base d'une analyse probabiliste du plus petit nombre correspondances de caractéristiques correctes qui permettent un alignement de la paire d'images.

7. Procédé selon l'une quelconque des revendications précédentes, dans lequel ladite analyse d'uniformité géométrique globale comprend un traitement RANSAC.

8. Procédé selon l'une quelconque des revendications précédentes, comprenant en outre une étape consistant à calculer une nouvelle valeur de seuil pour le nombre de concordances de caractéristiques supplémentaires qui présentent lesdits paramètres d'orientation et de mise à l'échelle enregistrés identiques si le résultat de l'analyse d'uniformité de géométrie globale est négatif.

9. Procédé selon la revendication 8, comprenant en outre une étape consistant à contrôler si le nombre de concordances qui présentent des paramètres d'orientation et de mise à l'échelle identiques requis pour atteindre la valeur de seuil associée à ces paramètres d'orientation et de mise à l'échelle, est probable sur la base du nombre total de correspondances de caractéristiques possibles restantes et d'une fréquence de correspondances de caractéristiques estimée pour chaque ensemble de paramètres d'orientation et de mise à l'échelle, et si le contrôle indique que l'atteinte d'un seuil est improbable, alors rejeter cette paire d'images en tant qu'appariement d'images possible.

10. Procédé selon l'une quelconque des revendications précédentes, comprenant en outre une étape consistant à mettre à jour un graphique d'alignement si les résultats du contrôle d'uniformité géométrique globale est positif.

11. Procédé selon la revendication 10, dans lequel ladite mise à jour comprend une étape consistant à exécuter une fermeture de graphique transitif.

12. Procédé selon la revendication 11, dans lequel ladite fermeture de graphique transitif comprend les étapes consistant à :

identifier un appariement d'images possible supplémentaire pour un groupe lié d'images ; et
déterminer si les images dans l'appariement d'images supplémentaire se chevauchent sur la base d'informations d'homographie en provenance d'autres appariements d'images dans le groupe lié d'images.

13. Procédé selon la revendication 12, comprenant en outre une étape consistant à aligner un appariement d'images possible après avoir déterminé que les images se chevauchent.

14. Procédé selon la revendication 12 ou la revendication 13, comprenant en outre une étape consistant à rejeter un appariement d'images possible après avoir déterminé que les images ne se chevauchent pas.

15. Procédé selon l'une quelconque des revendications précédentes, dans lequel ledit traitement comprend en outre une étape consistant à déterminer si une paire d'images satisfait ou pas à des conditions probabilistes pour l'alignement, et dans lequel ledit ou lesdits critères prédéfinis spécifient que la comparaison de caractéristiques n'a pas lieu pour les caractéristiques qui ont été déjà alignées.

16. Procédé selon la revendication 15, dans lequel ledit traitement comprend en outre une étape consistant à déterminer si une paire d'images satisfont ou pas à des conditions probabilistes comme étant non alignées, et dans lequel ledit ou lesdits critères prédéfinis spécifient que la comparaison de caractéristiques n'a pas lieu pour les caractéristiques qui ont été déjà déterminées comme étant non alignées.

17. Appareil fonctionnel pour exécuter le procédé selon l'une quelconque des revendications précédentes.

18. Appareil de traitement d'image fonctionnel pour traiter une pluralité d'images (1a ... 1h) de façon à déterminer un ou plusieurs groupes d'images, chaque groupe d'images formant un panorama (5a, 5b), l'appareil de traitement d'image comprenant :

des moyens destinés à identifier des caractéristiques distinctives dans chaque image ;
des moyens destinés à calculer une force de caractéristique de chaque caractéristique distinctive identifiée, dans lequel les moyens de calcul comprennent des moyens destinés à mesurer des valeurs d'un algorithme de détection de point d'intérêt au niveau des maximum locaux, la position d'un maximum local correspondant à la position d'un point d'intérêt, et pour chaque image, mettre à l'échelle les valeurs mesurées selon les valeurs mesurées dans cette image, dans lequel ladite mise à l'échelle comprend une étape consistant à normaliser les valeurs des maximum locaux dans une plage prédéfinie qui est commune à toutes les images ;
des moyens destinés à comparer une caractéristique distinctive dans une image avec des caractéristiques distinctives dans d'autres images de façon à identifier des caractéristiques de correspondance possibles, dans lequel les moyens de comparaison comprennent :

des moyens destinés à comparer des descripteurs d'image pour une région locale centrée au niveau d'une caractéristique avec ceux pour une région locale centrée au niveau de l'autre caractéristique de façon à déterminer des paramètres d'orientation et de mise à l'échelle relatifs pour lesdites deux régions locales ;
des moyens destinés à enregistrer les facteurs d'orientation et de mise à l'échelle déterminés en association avec la paire d'images correspondant aux deux caractéristiques ; et
des moyens destinés à analyser, pour une paire d'images, des caractéristiques comparées qui présentent des paramètres d'orientation et de mise à l'échelle enregistrés identiques pour une uniformité géométrique globale lorsque le nombre de paramètres d'orientation et de mise à l'échelle enregistrés identiques dépasse une valeur de seuil ; et
des moyens destinés à traiter lesdites correspondances possibles de façon à déterminer ledit ou lesdits groupes d'images ;
dans lequel lesdits moyens de comparaison sont fonctionnels pour comparer ladite caractéristique distinctive dans une image avec seulement le sous-ensemble de caractéristiques distinctives dans les autres images qui satisfont à un niveau de similitude des forces de caractéristiques des caractéristiques distinctives comparées.

FIG. 1

FIG. 2

FIG. 3

```
┌─────────────────────────────┐
│   Receive N input images    │── S1
└─────────────────────────────┘
              │
              ▼
┌─────────────────────────────┐
│        Initialisation       │── S3
└─────────────────────────────┘
              │
              ▼
┌─────────────────────────────┐
│   Detect interest points in │── S5
│     the N input images      │
└─────────────────────────────┘
              │
              ▼
┌─────────────────────────────┐
│      Normalise and order    │── S7
│   detected interest points  │
└─────────────────────────────┘
              │
              ▼
┌─────────────────────────────┐
│       Perform feature       │
│    matching for next        │
│    image feature and        │── S9
│       record results        │
└─────────────────────────────┘
              │
              ▼
        ◇ Probabilistic
          conditions met?  ── No
              │  S11
             Yes
              ▼
┌─────────────────────────────┐
│     Run RANSAC to find      │── S13
│    number of inliers and    │
│     best transformation     │
└─────────────────────────────┘
              │
              ▼
┌─────────────────────────────┐
│    Update registration      │
│       graph and/or          │── S15
│      probabilistic          │
│       conditions            │
└─────────────────────────────┘
              │
              ▼
     S17 ◇ All image
         pairs processed?  ── No
              │
             Yes
              ▼
┌─────────────────────────────┐
│      Merge linked           │── S19
│    images to form           │
│      panorama(s)            │
└─────────────────────────────┘
```

20

FIG. 4

For all image pairs, set
Similarity = -1 — S31

Set all elements of
Hough Transform
Accumulator = 0 — S33

Set all elements of
Threshold
Accumulator = $N_{min}$ — S35

S37 — Are images ordered?

Yes → S39 — Set Registration to UNDEFINED for adjacent image pairs and to FALSE for remaining image pairs

No

S41 — Are images time-stamped?

Yes → S43 — Set Registration to UNDEFINED for image pairs with time difference less than a threshold and to FALSE for remaining image pairs

No

For all image pairs, set
Registration to
UNDEFINED — S45

End — S47

FIG. 5

```
┌────────────────────────┐
│  Select next interest  │
│  point as subject      │         S61
│  feature and identify  │
│  image for subject     │
│  feature as            │
│  subject image         │
└────────────────────────┘
            │
            ▼
┌────────────────────────┐
│  Identify interest     │
│  points with           │
│  similar normalised    │         S63
│  feature strength in   │
│  images which are      │
│  unregistered with     │
│  respect to            │
│  subject image         │
└────────────────────────┘
            │
            ▼
┌────────────────────────┐
│  Find best matches     │
│  between subject       │         S65
│  feature and identified│
│  interest points       │
└────────────────────────┘
            │
            ▼
┌────────────────────────┐
│  For each best match,  │
│  convert relative      │
│  orientation and scale │         S67
│  factors to integer    │
│  coordinates and       │
│  update Hough Transform│
│  and Threshold         │
│  accumulators          │
└────────────────────────┘
```

FIG. 6

FIG. 7

EP 1 936 568 B1

## FIG. 8

```
                    ┌──────────────────────┐
                    │   Receive results of │      S71
                    │   RANSAC processing  │
                    └──────────────────────┘
                               │
                               ▼
                         ╱─────────────╲            S73
                        ╱     Does       ╲
                       ╱  number of inliers ╲
                       ╲  meet probabilistic ╱
                        ╲    threshold?    ╱
                         ╲───────────────╱
                        │                  │
        S75             │                  │ No        S79
                        ▼                  ▼
   ┌──────────────────────┐       ┌──────────────────────┐
   │  Update probabilistic│       │        Run           │
   │      conditions      │       │  Evaluate_Accuracy   │
   └──────────────────────┘       │     sub-routine      │
                │                  └──────────────────────┘
                │                             │
                │                             ▼
                │                  ┌──────────────────────┐
                │                  │   Run Graph_Closure  │
                │                  │     sub-routine      │
                │                  └──────────────────────┘
                │                             │      S81
                │                             │
                └────────────┐   ┌────────────┘
                             ▼   ▼
                       ╭──────────────╮     S77
                       │     End      │
                       ╰──────────────╯
```

FIG. 9

Set k = 1 — S91

Set l = k +1 — S93

S113

Set k = k + 1

S95 — Does path exist from image k to image l? — No → Set l = l + 1 — S97

Yes

Using shortest path between image k and image l, calculate homography $H_{kl}$ — S99

Project boundary of image l to image k and calculate area of overlap — S101

S103 — Overlap exists?

S105 — No → Set Registration [k,l] = FALSE

S107 — Yes → Run Evaluate_Accuracy sub-routine

l = N? — No

S109 — Yes

S111 — k = N-1? — No

Yes

End — S115

FIG. 10A

FIG. 10B

FIG. 10C

FIG. 10D

**EP 1 936 568 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1736928 A

- US 20050063608 A

### Non-patent literature cited in the description

- **LOWE ; BROWN.** Recognising Panoramas. *Proceedings of the 9th International Conference on Computer Vision,* October 2003, 1218-1225
- **D. CAPEL.** Image Mosaicing and Super-Resolution. *PhD thesis,* 2001
- **SAWHNEY et al.** Robust video mosaicing through topology inference and local to global alignment. *Proc. European Conference on Computer Vision and Image Understanding,* 2004, vol. 93 (2), 175-194

- A fast algorithm for detection and precise location of distinct points, corners, and circular features. **Foerstner ; Gulch.** Proc. Intercommission Conference on Fast Processing of Photogrammetric Data. Interlaken, 1987, 287-305